Europäisches Patentamt

European Patent Office

Office européen des brevets

(11) Veröffentlichungsnummer: **0 090 095**
**B1**

## EUROPÄISCHE PATENTSCHRIFT

(45) Veröffentlichungstag der Patentschrift:
05.11.86

(51) Int. Cl.⁴: **H 02 H 1/00**

(21) Anmeldenummer: **82200381.0**

(22) Anmeldetag: **29.03.82**

(54) **Verfahren und Einrichtung zur Auswertung des Sekundärstromes eines primärseitig in eine Leitung eines elektrischen Energieversorgungsnetzes geschalteten Stromwandlers.**

(43) Veröffentlichungstag der Anmeldung:
**05.10.83 Patentblatt 83/40**

(45) Bekanntmachung des Hinweises auf die Patenterteilung:
**05.11.86 Patentblatt 86/45**

(84) Benannte Vertragsstaaten:
**CH DE FR GB LI NL SE**

(56) Entgegenhaltungen:
**CH-A-500 609**
**DE-A-2 061 128**
**DE-A-2 221 048**
**DE-B-1 241 526**
**DE-B-2 403 591**
**FR-A-1 350 919**
**FR-A-2 239 791**

(73) Patentinhaber: **BBC Aktiengesellschaft Brown, Boveri & Cie., Haselstrasse, CH- 5401 Baden (CH)**

(72) Erfinder: **De Mesmaeker, Ivan, Dipl.- Ing., Zelgliackerstrasse 12, CH- 5200 Windisch (CH)**
Erfinder: **Bulaty, Paul, Dipl.- Ing., Seminarstrasse 74, CH- 5430 Wettingen (CH)**
Erfinder: **Franc, Zdenek, Dipl.- Ing., Reichstrasse 22, CH- 5412 Gebenstorf (CH)**
Erfinder: **Salerno, Giuseppe, Hosacherstrasse 8, CH- 5417 Untersiggenthal (CH)**

## Beschreibung

Die vorliegende Erfindung bezieht sich auf ein Verfahren sowie auf eine Einrichtung zur Auswertung des Sekundärstromes eines primärseitig in eine Leitung eines elektrischen Energieversorgungsnetzes geschalteten Stromwandlers bei Sättigung des Stromwandlers gemäss dem Oberbegriff der Ansprüche 1 bzw. 8.

Ein derartiges Verfahren und eine derartige Einrichtung finden Verwendung bei allen Schutzeinrichtungen, bei welchen der Sekundärstrom als Messgrösse zur Erfassung von Kurzschlüssen verwendet wird, also beispielsweise bei Distanzschutz-, Richtungsschutz- oder Vergleichsschutzeinrichtungen.

Aufgabe solcher Schutzeinrichtungen ist es, den kurzschlussbehafteten Teil des elektrischen Energieversorgungsnetzes möglichst schnell und selektiv abzuschalten.

Die Schutzeinrichtungen können jedoch in ihrer Funktion durch Sättigung von Stromwandlern stark beeinträchtigt werden, da die Sättigungen gerade infolge von Kurzschlüssen auftreten, oder genauer, durch die Gleichstromkomponenten der Kurzschlußströme verursacht werden.

Die Gefahr für das Auftreten von Sättigungen von Stromwandlern bei Kurzschlüssen wächst mit der ständig steigenden Kurzschlussleistung der elektrischen Energieversorgungsnetze. Mit der Kurzschlussleistung wird auch die Gleichstromkomponente der Kurzschlußströme immer grösser und erreicht kritische Werte, für welche die Ueberstromziffer im Energieversorgungsnetz installierter Stromwandler häufig nicht ausgelegt ist.

Ein Weg zur Vermeidung der Sättigungen und ihrer unerwünschten Auswirkungen auf die Schutzeinrichtungen wäre, Stromwandler mit zu gering bemessener Ueberstromziffer durch solche mit ausreichend bemessener Ueberstromziffer zu ersetzen. Dieser Weg ist wirtschaftlich jedoch sehr aufwendig.

Ein anderer Weg wäre, geeignete Vorkehrungen gegen die Auswirkungen der Sättigungen bei den Schutzeinrichtungen zu treffen. Ein Beispiel hierfür ist aus der DE-B 23 39 932 bekannt. In dieser wird ein Distanzschutzverfahren beschrieben, das den Sekundärstrom nur innerhalb zeitlich kurzer Phasen zwischen zwei Sättigungen auswertet, in denen der Primärstrom abbildtreu auf den Sekundärstrom übertragen wird. Dieses Verfahren setzt jedoch einen speziellen Aufbau der Schutzeinrichtungen voraus und ist mit bereits im Energieversorgungsnetz installierten Schutzeinrichtungen in der Regel nicht durchführbar, so dass auch diese mit grossem wirtschaftlichen Aufwand ersetzt werden müssten.

Aufgabe der Erfindung ist es daher insbesondere, einen einfachen und wirtschaftlichen Weg aufzuzeigen und ein neues Verfahren sowie eine neue Einrichtung zur Auswertung des Sekundärstromes eines primärseitig in eine Leitung eines elektrischen Energieversorgungsnetzes geschalteten Stromwandlers bei Sättigung des Stromwandlers anzugeben.

Die erfindungsgemässe Lösung dieser Aufgabe kennzeichnet sich durch die in den Ansprüchen 1 bzw. 7 angegebenen Merkmale.

Das erfindungsgemässe Verfahren sowie die erfindungsgemässe Einrichtung liefern demnach bei Sättigung des Stromwandlers ein Stromsignal, welches an den Sekundärstrom während sättigungsfreier Phasen angepasst ist und welches einen Signalverlauf aufweist, wie er für den Sekundärstrom bei Verwendung eines nicht sättigenden Stromwandlers zu erwarten wäre. Dieses Stromsignal kann in der Folge für die Dauer der Sättigung vorteilhaft den Schutzeinrichtungen zur Auswertung anstelle des Sekundärstromes zugeführt werden.

Unter wirtschaftlichen Gesichtspunkten bietet die Erfindung den Vorteil, dass keinerlei Aenderungen, weder an den im Energieversorgungsnetz installierten Stromwandlern, noch an den Schutzeinrichtungen vorgenommen werden müssen.

Darüber hinaus ist die Erfindung in vorteilhafter Weise mit allen Arten von Stromwandlern sowie Schutzeinrichtungen kompatibel.

Weitere Merkmale sowie Vorteile der Erfindung ergeben sich aus dem nachstehend anhand von Zeichnungen erläuterten Ausführungsbeispiel.

Es zeigt:

Fig. 1 in drei Diagrammen den Verlauf des Frimärstromes, des Sekundärstromes, des Stromsignals sowie der magnetischen Induktion eines Stromwandlers bei Sättigung,

Fig. 2 ein Blockdiagramm einer Einrichtung gemäss der Erfindung und

Fig. 3 eine Verwendung der erfindungsgemässen Einrichtung bei einem mehrphasigen Energieversorgungsnetz.

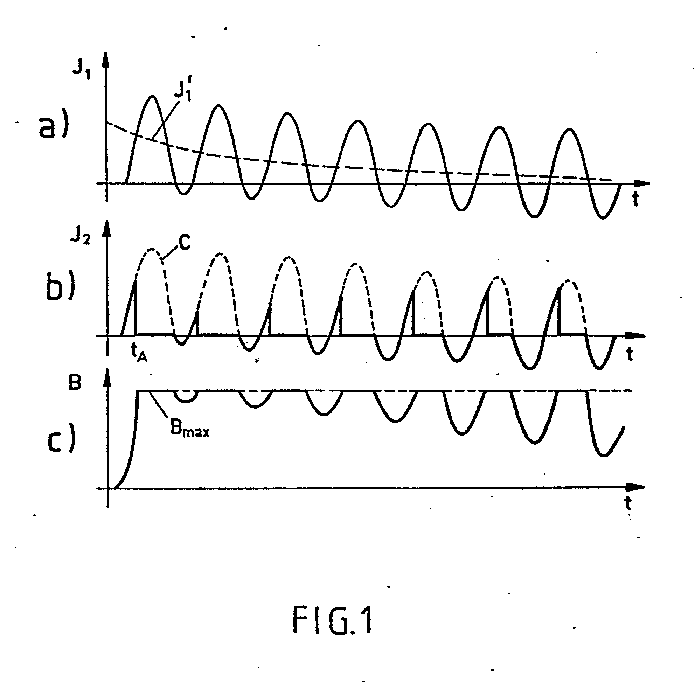

Fig. 1a veranschaulicht ein Beispiel für den Verlauf des Kurzschluss- oder Primärstromes $J_1$ des Stromwandlers bei Sättigung. Der Kurzschluss- oder Primärstrom $J_1$ ist durch die exponentiell abklingende Gleichstromkomponente $J_1$ weit ins Positive verlagert und nimmt dort hohe Werte an, dass die in Fig. 1C dargestellte magnetische Induktion B des Stromwandlers ihren Sättigungswert $B_{max}$ erreicht, über welchen hinaus sie mit dem Primärstrom $J_1$ nicht weiter ansteigen kann und konstant bleibt. Der Sekundärstrom $J_2$, dargestellt in Fig. 1b, ist bei zeitlich konstanter Induktion B gleich Null. Die Sättigung des Stromwandlers führt also zu einer Verzerrung des Sekundärstromes $J_2$ gegenüber dem Primärstrom $J_1$. Eine abbildtreue Uebertragung des Primärstromes $J_1$ auf den Sekundärstrom $J_2$ setzt nach einer Sättigung frühestens wieder mit dem ersten Polaritätwechsel des Primärstromes $J_1$ ein. Liegt die Abklingzeit der Gleichstromkomponente

$J_1'$ in der Grössenordnung einer oder mehrerer Periodendauern des netzfrequenten Primärstromes $J_1$, so tritt Sättigung mehrfach hintereinander auf.

Das erfindungsgemässe Stromsignal C, welches bei sättigungsfreien Nulldurchgängen des Sekundärstromes $J_2$ synchron mit diesem erzeugt, zum Zeitpunkt $t_A$ jeweils an dessen Momentanwert angepasst wird und diesen bei Eintritt der Sättigung jeweils sinusförmig extrapoliert, ist in Fig. 1b durch eine unterbrochene Linie gekennzeichnet.

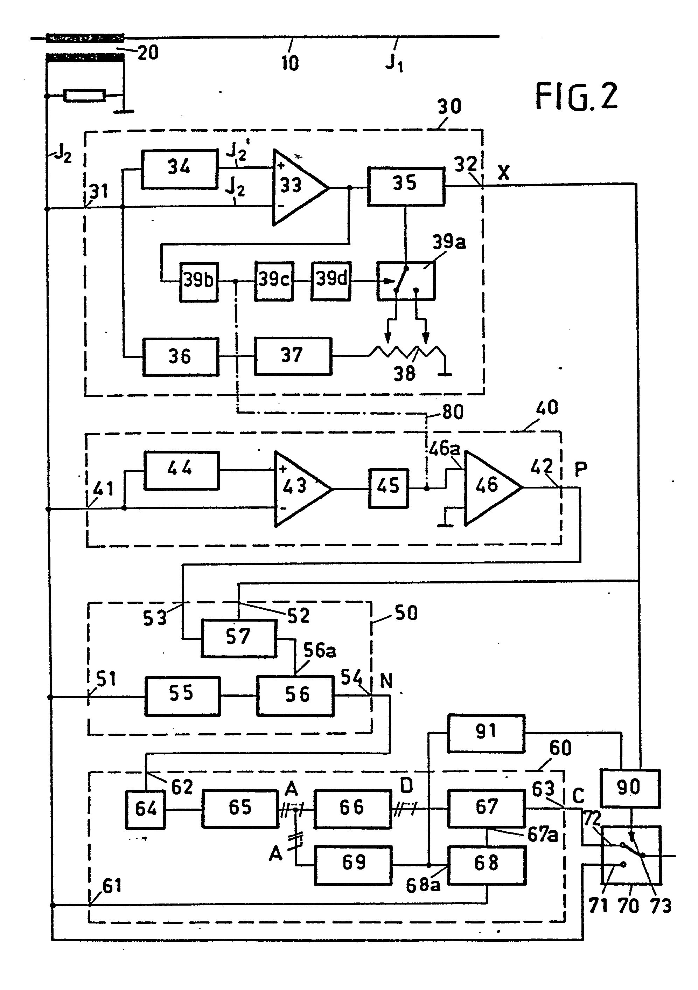

Fig. 2 zeigt die Leitung 10 eines elektrischen Energieversorgungsnetzes in welche der Stromwandler 20 primärseitig geschaltet ist. Sekundärseitig sind an den Stromwandler 20 parallel der Sättigungsdetektor 30, der Polaritätsdetektor 40 und mit jeweils ihrem ersten Eingang 51, 61, 71 der Nulldurchgangsdetektor 50, der Extrapolationsschaltkreis 60 sowie der erste Schalter 70 angeschlossen.

Der Ausgang 32 des Sättigungsdetektors 30 ist auf den zweiten Eingang 52 und der Ausgang 42 des Polaritätsdetektors 40 auf den dritten Eingang 53 des Nulldurchgangsdetektors 50 geschaltet. Der Ausgang 54 des Nulldurchgangsdetektors 50 ist auf den zweiten Eingang 82 des Extrapolationsschaltkreises 60 geschaltet. Der Ausgang 83 des Extrapolationsschaltkreises 80 ist auf den zweiten Eingang 72 des ersten Schalters 70 geschaltet, dessen Schalteingang 73 mit dem Ausgang 32 des Sättigungsdetektors verbunden ist.

Beim Eintritt der Sättigung des Stromwandlers 20 erzeugt der Sättigungsdetektor 30 aus dem Sekundärstrom $J_2$ das den Eintritt der Sättigung anzeigende Sättigungssignal X und der Polaritätsdetektor 40 erzeugt aus dem Sekundärstrom $J_2$ das die Polarität der Verlagerung des Primärstromes $J_1$ anzeigende Polaritätssignal P. Das Sättigungssignal X und das Polaritätssignal P sind in vorteilhafter Weise binäre Signale von etwa der eineinhalbfachen Dauer der Periode des Sekundärstromes $J_2$. Die Polarität der Sättigung wird dann durch die binären Zustände des Polaritätssignals P ausgedrückt.

Entsprechend der Polarität der Verlagerung des Primärstromes $J_1$ werden bei Sättigung, d.h. bei Anliegen des Sättigungssignals X, mit dem Polaritätssignal P am Nulldurchgangsdetektor 50 Nulldurchgänge des Sekundärstroms $J_2$ gleicher Polarität ausgewählt. Aus Fig. 1 ist zu erkennen, dass dies gerade die von der Sättigung nicht betroffenen Nulldurchgänge sind.

Der Nulldurchgangsdetektor 50 erzeugt bei jedem ausgewählten Nulldurchgang des Sekundärstroms $J_2$ das Nulldurchgangssignal N. Nach dem Empfang des Nulldurchgangssignals N erzeugt der Extrapolationsschaltkreis 80 aus dem Sekundärstrom $J_2$ durch Extrapolation das Stromsignal C. Das Stromsignal G wird schliesslich mit Hilfe des ersten Schalters 70 anstelle des Sekundärstroms $J_2$ den Schutzeinrichtungen zur weiteren Auswertung zugeschaltet. Geschaltet wird der erste Schalter 70 über den Schalteingang 73 durch das Sättigungssignal X.

Der Sättigungsdetektor 30 ist in vorteilhafter Weise mit dem ersten Differenzbildner 33 versehen, dessen erster Eingang direkt und dessen zweiter Eingang über das erste Frequenzfilter 34 an den ersten Eingang 31 des Sättigungsdetektors angeschlossen ist. Das erste Frequenzfilter 34 ist mit Vorteil ein Frequenzbandfilter, welches für sinusförmige netzfrequente Signale keine Dämpfung und keine Phasenverschiebung aufweist. Dem ersten Frequenzfilter 34 ist der Trigger 35 nachgeschaltet, dessen Ausgang auf den Ausgang 32 des Sättigungsdetektors 30 geschaltet ist.

Solange der Stromwandler 20 sättigungsfrei überträgt und einen sinusförmigen netzfrequenten Sekundärstrom $J_2$ erzeugt, bleibt das erste Frequenzfilter 34 ohne Wirkung, so dass an beiden Eingängen des Differenzbildners 33 der gleiche Sekundärstrom $J_2$ anliegt. Die Differenz ist demzufolge Null. Bei Sättigung des Stromwandlers 20, ist, wie bereits anhand von Fig. 1 erläutert, der Sekundärstrom $J_2$ gegenüber der Sinusform stark verzerrt und enthält, im Sinne einer Fourier-Analyse, netzfremde Frequenzen. Diese werden vom Frequenzfilter 34 gedämpft und phasenverschoben so dass am Differenzbildner 33 verschiedene Sekundärströme $J_2$ und $J_2'$ anliegen. Ueberschreitet die Differenz zwischen $J_2$ und $J_2'$ einen durch die Triggerschwelle des Triggers 35 vorgegebenen Wert so wird das Sättigungssignal X erzeugt. Die Triggerschwelle des Triggers 35 wird in vorteilhafter Weise auf einen Bruchteil, z.B. 20 % des Höchstwertes des Sekundärstroms $J_2$, eingestellt. Zur Ableitung der Triggerschwelle ist an den Eingang 31 des Sättigungsdetektors 30 in Reihe das Tiefpassfilter 36, der Schaltkreis zu Höchstwerterfassung 37, sowie der Spannungsteiler 38 angeschlossen.

Im Tiefpassfilter 36 wird der Sekundärstrom $J_2$ zunächst geglättet, bevor sein Höchstwert mit dem Schaltkreis zur Höchstwerterfassung 37 erfasst wird. Am Spannungsteiler 38 wird die Triggerschwelle dann als Bruchteil des Höchstwertes abgegriffen. Eine Umschaltmöglichkeit des Teilerverhältnis des Spannungsteilers 38 durch einen zweiten Schalter 39a kann zusätzlich vorgesehen werden. Der Umschaltzeitpunkt wird in vorteilhafter Weise mit dem Zeitpunkt des Eintritts der Sättigung korreliert. Dazu wird an den Ausgang des Differenzbildners 33 in Reihe der erste Integrator 39b, der zweite Trigger 39c sowie das Verzögerungsglied 39d angeschlossen. Der Ausgang des Verzögerungsgliedes beaufschlagt den Schalteingang des zweiten Schalters 39a. Die Verzögerungszeit des Verzögerungsgliedes 39d beträgt mit Vorteil 2ms.

Der Polaritätsdetektor 40 ist mit Vorteil mit dem zweiten Differenzbildner 43 versehen, dessen erster Eingang direkt und dessen zweiter Eingang über das zweite Frequenzfilter 44 an den ersten Eingang 41 des Polaritätsdetektors 40 angeschlossen ist. Mit dem Ausgang des zweiten Differenzbildners 43 ist über den zweiten Integrator 45 der Eingang 46a des Komparators 46 beaufschlagt, dessen Ausgang auf den Ausgang 42 des Polaritätsdetektors 40 geschaltet ist.

Anstelle des zweiten Differenzbildners 43, des zweiten Frequenzfilters 44 und des zweiten Integrators 45 kann in einer anderen Ausführungsform auch der erste Differenzbildner 33, das erste Frequenzfilter 34 sowie der erste Integrator 39b vom Polaritätsdetektor 30 mitverwendet werden. Die dann notwendige Verbindungsleitung 80 zwischen dem Sättigungsdetektor 30 und dem Polaritätsdetektor 40 ist in Fig. 2 strichpunktiert gezeichnet.

Bei positiver Polarität der Differenz am Ausgang des zweiten Differenzbildners 43 ist der Eingang 46a des Komparators 46 positiv gegenüber dem auf Nullpotential liegenden Referenzeingang 46b. Am Ausgang des Komparators 46 erscheint in diesem Fall z.B. der binäre "1"-Zustand. Bei negativer Polarität der Differenz sind die Verhältnisse genau entgegengesetzt und es erscheint am Ausgang des Komparators z.B. der binäre "0"-Zustand.

Der Nulldurchgangsdetektor weist mit Vorteil den Rechteckumformer 55 und den Flankentrigger 56 in Reihe zwischen seinem ersten Eingang 51 und seinem Ausgang 54 auf. Der die Polarität der Triggerflanken bestimmende Eingang 56a des Flankentriggers 56 ist mit dem Ausgang des D-Kippgliedes 57 verbunden, dessen Takteingang mit dem zweiten 52 und dessen dem Takteingang 52 untergeordneter D-Eingang mit dem dritten Eingang 53 des Nulldurchgangsdetektors 50 beaufschlagt ist.

Der Extrapolationsschaltkreis 60 weist zwischen seinem zweiten Eingang 62 und seinem Ausgang 63 mit Vorteil in Reihe den Taktgeber 64, den Zähler 65, den Lesespeicher 66 sowie den multiplizierenden Digital-Analog-Converter 67 auf. Der erste Eingang 61 des Extrapolationsschaltkreises 60 ist über das Abtast-Halteglied 68 mit dem den Multiplikationsfaktor bestimmenden Eingang 67a des multiplizierenden Digital-Analog-Converters 67 verbunden. Weiter ist der den Abtastzeitpunkt bestimmende Eingang 68a am Abtast-Halteglied 68 über den Adressen-Dekodierer 69 mit dem Ausgang des Zählers 65 verbunden.

Mit dem Nulldurchgangssignal N wird der Taktgeber 64 gestartet, in dessen Rhythmus der Zähler 65 zu zählen beginnt. Der Zähler 65 ist vorteilhaft ein Binärzähler. Die vom Zähler 65 erzeugten Zahlen dienen dem Lesespeicher 66 als Adresse. Der Lesespeicher 66 gibt den Inhalt der jeweils anliegenden Adresse an den multiplizierenden Digital-Analog-Converter 67 weiter. Die Verbindung zwischen dem Zähler 65 und dem Lesespeicher 66 besteht also nach Massgabe der Codierung der Zahlen im Zähler 65, aus einer Mehrzahl von Adressleitungen A.

Entsprechend besteht die Verbindung zwischen dem Lesespeicher 66 und dem multiplizierenden Digital-Analog-Converter 67 aus einer Mehrzahl von Datenleitungen D. Der Inhalt der Adressen des Lesespeichers 66 besteht aus Sinuswerten, in gleichmässigen Schritten berechnet für ein wachsendes Argument zwischen 0° und 360°. Die Anzahl der gespeicherten Sinuswerte entspricht dem Faktor um den die Frequenz des Taktgebers 64 höher ist als die Netzfrequenz. Dieser Faktor beträgt z.B. 200.

Der multiplizierende Digital-Analog-Converter 67 erzeugt aus der Folge der diskreten Sinuswerte das analoge, genaugenommen treppenförmige Stromsignal C, welches durch ein in Fig. 2 nicht gezeigtes Filterglied noch geglättet werden kann.

Da der Taktgeber 64 mit dem bei ausgewählten Nulldurchgängen des Sekundärstroms $J_2$ erzeugten Nulldurchgangssignal N gestartet wird, ist das Stromsignal C automatisch synchron mit dem Sekundärstrom $J_2$. Es muss lediglich noch in seiner Amplitude an diesen angepasst werden. Dazu wird z.B. bei einem Zählerstand von 30° der Momentanwert des Sekundärstroms $J_2$ über das Abtast-Halteglied 68 erfasst und ab diesem Zeitpunkt das Stromsignal C im multiplizierenden Digital-Analog-Converter mit diesem Momentanwert multipliziert. Das Erreichen des Zählerstandes von 30° wird dem Abtast-Halteglied 68 von dem Adressen-Dekodierer 69 signalisiert.

Damit den Schutzeinrichtungen das Stromsignal C erst dann zugeschaltet wird, wenn es in seiner Amplitude an den Sekundärstrom $J_2$ angepasst ist, kann noch ein Und-Glied 90 in der Steuerleitung des ersten Schalters 70 vorgesehen werden. Dieses ist mit dem Ausgang 32 des Sättigungsdetektors 30, also mit dem Sättigungssignal X sowie über das Halteglied 91 mit dem Ausgang des Adressen-Dekodierers 69 beaufschlagt.

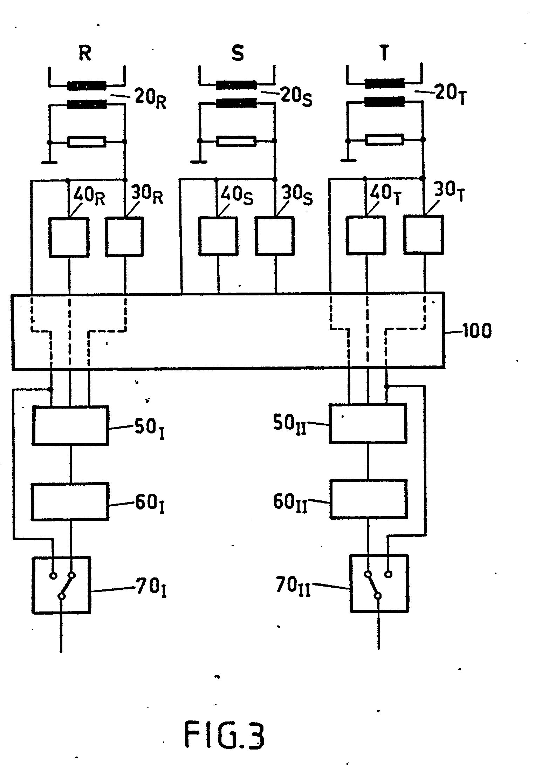

Fig. 3 zeigt eine Verwendung der erfindungsgemässen Einrichtung bei einem mehrphasigen elektrischen Energieversorgungsnetz am Beispiel eines dreiphasigen Drehstromnetzes mit jeweils einem Stromwandler $20_R$, $20_S$ $20_T$ pro Phase R, S, T.

Da bei einem einpoligen Kurzschluss, d.h. einem Kurzschluss zwischen einer der drei Phasen R, S, T und Erde nur einer der drei Stromwandler $20_R$, $20_S$, $20_T$ sättigen kann und bei mehrpoligen Kurzschlüssen von den Schutzeinrichtungen nur die Ströme von zwei der möglicherweise mehr als zwei kurzschlussbehafteten Phasen R, S, T ausgewertet werden, genügt es im Prinzip, die erfindungsgemässe Einrichtung bei einem dreiphasigen Drehstromnetz doppelt vorzusehen. Die Zuschaltung der Ströme der kurzschlussbehafteten Phase oder Phasen R, S, T zu einer der, oder beiden erfindungsgemässen Einrichtungen kann mit einer (z.B. aus der Schrift "Relais und Schutztechnik" CH-ES 25-90 (1981) der Firma BBC-Brown, Boveri & Cie., 5400 Baden/Schweiz) bekannten Auswahlschaltung durchgeführt werden. Da jede Auswahlschaltung eine gewisse Schaltverzögerung aufweist eine Sättigung eines der Stromwandler $20_R$ $20_S$ $20_T$ sowie die Verlagerung der Sättigung jedoch zum frühest möglichen Zeitpunkt festgestellt werden sollte, ist es von Vorteil, wie in Fig. 3 dargestellt, pro Stromwandler $20_R$, $20_S$, $20_T$ jeweils einen Sättigungsdetektor $30_R$, $30_S$, $30_T$ sowie einen Polaritätsdetektor $40_R$, $40_S$, $40_T$ pro Phase R, S, T vorzusehen.

Dagegen brauchen nur zwei Nulldurchgangsdetektoren $50_I$, $50_{II}$, zwei Extrapolationsschaltkreise $60_I$, $60_{II}$ sowie zwei erste Schalter $70_I$, $70_{II}$ vorgesehen zu werden.

Jeweils einer der drei Stromwandler $20_R$, $20_S$, $20_T$ sowie der an den betreffenden Stromwandler angeschlossene Sättigungsdetektor $30_R$, $30_S$, $30_T$ und Polaritätsdetektor $40_R$, $40_S$, $40_T$ sind über die Auswahllogik 100 entweder mit dem primären Nulldurchgangsdetektor $50_I$, dem primären Extrapolationsschaltkreis $60_I$ und dem primären ersten Schalter $70_I$ oder dem sekundären Nulldurchgangsdetektor $50_{II}$, dem sekundären Extrapolationsschaltkreis $60_{II}$ und dem sekundären ersten Schalter $70_{II}$ verbindbar. Eine mögliche Verbindung ist in Fig. 3 innerhalb der Auswahllogik 100 strichliert dargestellt.

**Bezeichnungsliste**

$J_1$ Kurzschluss- oder Primärstrom
$J_1'$ Gleichstromkomponente des Kurzschlußstromes
$J_2$ Sekundärstrom
$J_2'$ Sekundärstrom nach Frequenzfilterung
B magnetische Induktion
$B_{max}$ Maximalwert der magnetischen Induktion
C Stromsignal
t Bezeichnung der Zeitachse
$t_A$ Abtastzeitpunkt
10 Leitung
20 Stromwandler
30 Sättigungsdetektor
31 Eingang des Sättigungsdetektors
32 Ausgang des Sättigungsdetektors
33 erster Differenzbildner
34 erstes Frequenzfilter
35 erster Trigger
36 Tiefpassfilter
37 Schaltkreis zur Höchstwerterfassung
38 Spannungsteiler
39a zweiter Schalter
39b erster Integrator
39c zweiter Trigger
39d Verzögerungsglied
X Sättigungssignal
40 Polaritätsdetektor
41 erster Eingang des Polaritätsdetektors
42 Ausgang des Polaritätsdetektors
43 zweiter Differenzbildner
44 zweites Frequenzfilter
45 zweiter Integrator

46 Komparator
47 Eingang des Komparators
P Polaritätssignal
50 Nulldurchgangsdetektor
51 erster Eingang des Nulldurchgangsdetektors
52 zweiter Eingang des Nulldurchgangsdetektors
53 dritter Eingang des Nulldurchgangsdetektors
54 Ausgang des Nulldurchgangsdetektors
55 Rechteckumformer
56 Flankentrigger
56a die Polarität der Triggerflanken bestimmende Eingang des Flankentriggers
57 D-Kippglied
N Nulldurchgangssignal
60 Extrapolationsschaltkreis
61 erster Eingang des Extrapolationsschaltkreises
62 zweiter Eingang des Extrapolationsschaltkreises
63 Ausgang des Extrapolationsschaltkreises
64 Taktgeber
65 Zähler
66 Lesespeicher
67 multiplizierender Digital-Analog-Converter
68 Abtast-Halteglied
68a Abtastzeitpunkt bestimmender Eingang des Abtast-Ealtegliedes
69 Adressen-Dekodierer
A Adressleitungen
D Datenleitungen
70 erster Schalter
71 erster Eingang des ersten Schalters
72 zweiter Eingang des ersten Schalters
73 Schalteingang des ersten Schalters
80 Verbindungsleitung
90 Und-Glied
91 Ealteglied
R,S,T Phasen des Drehstromsystems
100 Auswahllogik

**Patentansprüche**

1. Verfahren zur Auswertung des Sekundärstroms ($J_2$) eines primärseitig in eine Leitung (10) eines elektrischen Energieversorgungsnetzes geschalteten Stromwandlers (20) bei Sättigung des Stromwandlers (20), bei welchem Nulldurchgänge ausgewählt werden, dadurch gekennzeichnet, dass bei Eintritt der Sättigung ein die Sättigung anzeigendes Sättigungssignal (X) sowie ein die Polarität der Verlagerung des Primärstroms ($J_1$) anzeigendes Polaritätssignals (P) erzeugt werden, dass mit dem Sättigungssignal (X) und dem Polaritätssignal (P) der Polarität der Verlagerung des Primärstroms ($J_1$) entsprechende, von der Sättigung nicht betroffenen Nulldurchgänge des Sekundärstroms ($J_2$) ausgewählt werden, dass der Momentanwert des Sekundärstroms ($J_2$) jeweils zu einem bestimmten Zeitpunkt nach den ausgewählten Nulldurchgängen erfasst wird, dass jeweils ein mit den ausgewählten Nulldurchgängen synchronisiertes, zu den bestimmten Zeitpunkten in seiner Grösse an den jeweiligen Momentanwert des Sekundärstroms ($J_2$) angepasstes, sinusförmiges Stromsignal (C) erzeugt wird und dass das Stromsignal (C) nach Eintritt der Sättigung anstelle des Sekundärstroms ($J_2$) geliefert wird.

2. Verfahren nach Anspruch 1, dadurch gekennzeichnet, dass als Kriterium für den Eintritt der Sättigung und für die Erzeugung des Sättigungssignals (X) die Ueberschreitung einer Triggerschwelle durch die Differenz aus dem Sekundärstrom ($J_2$) und dem einer Frequenzfilterung unterzogenen sekundärstrom ($J_2'$) verwendet wird.

3. Verfahren nach Anspruch 2, dadurch gekennzeichnet, dass die Triggerschwelle nacheinander auf verschiene Bruchteile des Höchstwertes des Sekundärstroms ($J_2$) eingestellt wird.

4. Verfahren nach Anspruch 1, dadurch gekennzeichnet, dass die Polarität der Verlagerung des Primärstromes ($J_1$) der Polarität der Differenz aus dem Sekundärstrom ($J_2$) und dem einer Frequenzfilterung unterzogenen Sekundärstrom ($J_2'$) gleichgesetzt und jeweils einem von zwei Zuständen des Polaritätssignals (P) zugeordnet wird.

5. Verfahren nach Anspruch 3 oder 4, dadurch gekennzeichnet, dass die Frequenzfilterung allein einen netzfrequenten sinusförmigen Sekundärstrom ($J_2$) in Amplitude und Phase unverändert lässt.

6. Verfahren nach Anspruch 1, dadurch gekennzeichnet, dass das Stromsignal (C) durch Digital-Analog-Umwandlung aus binär codiert gespeicherten diskreten Momentanwerten erzeugt wird.

7. Einrichtung zur Auswertung des Sekundärstroms ($J_2$) eines primärseitig in eine Leitung (10) eines elektrischen Energiversorgungsnetzes geschalteten Stromwandlers (20) bei Sättigung des Stromwandlers (20) mit einem an einem Ausgang (54) Nulldurchgangssignale (N) abgebenden Nulldurchgangsdetektor (50), dadurch gekennzeichnet, dass ein bei Eintritt einer Sättigung an einem Ausgang (32) ein Sättigungssignal abgebender Sättigungsdetektor (30), ein die Polarität der Verlagerung des Primärstroms ($J_1$) durch ein Polaritätssignal (P) an einem Ausgang (42) anzeigender Polaritätsdetektor (40) und mit jeweils einem ersten Eingang (51, 61, 71) der Nulldurchgangsdetektor (50), ein an einem Ausgang (63) ein Stromsignal (C) abgebender Extrapolationsschaltkreis (60) sowie ein erster Schalter (70) sekundärseitig an den Stromwandler (20) angeschlossen sind, dass der genannte Ausgang (32) des Sättigungsdetektors (30) auf einen zweiten (52) und der genannte Ausgang (42) des Polaritätsdetektors (40) auf einen dritten Eingang (53) des Nulldurchgangsdetektors (50) geschaltet und dass diese Eingänge (52, 53) Auswahleingänge für die Nulldurchgangssignale (N) sind wobei der Nulldurchgangsoktektor (50) an einem Ausgang (54) von der Sättigung nicht betsoffene Nulldurchgänge des Sekundrstroms (J2) abgibt, dass der genannte Ausgang (54) des Nulldurchgangsdetektors (50) auf einen zweiten Eingang (62) des Extrapolationsschaltkreises (60) geschaltet ist, wobei der Extrapolationsschaltkreis (60) an seinem Ausgang (63) ein nach den durch den Nulldurchgangsdektor (50) ausgewählten Nulldurchgängen synchronisiertes und in seiner Grösse jeweils an den zu einem bestimmten Zeitpunkt nach einem ausgewählten Nulldurchgang abgetasteten Momentanwert des Sekundärstroms (J2) angepasstes, sinusförmiges Stromsignal (c) erzeugt, dass der genannte Ausgang (63) des Extrapolationsschaltkreises (60) auf einen zweiten Eingang (72) des ersten Schalters (70) geschaltet ist und dass dessen Schalteingang (73) mit dem Ausgang (32) des Sättigungsdetektors (20) verbunden ist, so dass bei Vorhandensein eines Sättigungssignals (X) der zweite Eingang (72) zum Ausgang des ersten Schalters (70) durchgeschaltet ist.

8. Einrichtung nach Anspruch 7, dadurch gekennzeichnet, dass der Sättigungsdetektor (30) mit einem ersten Differenzbildner (33) versehen ist, dessen erster Eingang direkt und dessen zweiter Eingang über ein erstes Frequenzfilter (34) an den Eingang (31) des Sättigungsdetektors (30) angeschlossen ist und mit einem ersten Trigger (35), der dem ersten Differenzbildner (33) nachgeschaltet und dessen Ausgang auf den Ausgang (32) des Sättigungsdetektors (30) geschaltet ist.

9. Einrichtung nach Anspruch 8, dadurch gekennzeichnet, dass an den Eingang (31) des Sättigungsdetektors (30) in Reihe ein Tiefpassfilter (36), ein Schaltkreis zu Höchstwerterfassung (37) sowie ein Spannungsteiler (38) mit mindestens einem Abgriff für die Triggerschwelle des ersten Triggers (35) angeschlossen ist.

10. Einrichtung nach Anspruch 9, dadurch gekennzeichnet, dass die Triggerschwelle des ersten Triggers (35) über einen zweiten Schalter (39a) an mindestens zwei verschiedenen Abgriffen des Spannungsteilers (38) abgreifbar ist und der zweite Schalter (39a) von einem ersten Integrator (39b), einem zweiten Trigger (39c) sowie einem Verzögerungsglied (39d) gesteuert wird, die in Reihe an dem Ausgang des ersten Differenzbildners (33) angeschlossen sind.

11. Einrichtung nach einem der Ansprüche 7 bis 10, dadurch gekennzeichnet, dass der Polaritätsdetektor (40) mit einem zweiten Differenzbildner (43) versehen ist, dessen erster Eingang direkt und dessen zweiter Eingang über ein zweites Frequenzfilter (44) an den Eingang (41) des Polaritätsdetektors (40) angeschlossen und dessen Ausgang über einen zweiten Integrator (45) einen Eingang (46a) eines Komparators (46) beaufschlagt, dessen Ausgang auf den Ausgang (42) des Polaritätsdetektors geschaltet ist.

12. Einrichtung nach einem der Ansprüche 7 bis 11, dadurch gekennzeichnet, dass zwischen dem ersten Eingang (51) und dem Ausgang (54) des Nulldurchgangsdetektors (50) in Reihe ein Rechteckumformer (55) und ein Flankentrigger (56) geschaltet ist, wobei ein die Polarität der Triggerflanken bestimmender Eingang (56a) des Flankentriggers (56) an den Ausgang eines D-Kippgliedes (57) angeschlossen ist, dessen Takteingang mit dem zweiten (52) und dessen D-Eingang mit dem dritten Eingang (53) des Nulldurchgangsdetektors (50) beaufschlagt ist.

13. Einrichtung nach einem der Ansprüche 7 bis 12, dadurch gekennzeichnet, dass zwischen den zweiten Eingang (62) und den Ausgang (63) des Extrapolationsschaltkreises (60) in Reihe ein Taktgeber (64), ein Zähler (65), ein Lesespeicher (66) sowie ein multiplizierender Digital-Analog-Converter (67) geschaltet sind.

14. Einrichtung nach Anspruch 13, dadurch gekennzeichnet, dass der erste Eingang (61) des Extrapolationsschaltkreises (60) über ein Abtast-Halteglied (68) mit einem den Mulitplikationsfaktor bestimmenden Eingang (67a) des multiplizierenden Digital-Analog-Converters (67) verbunden ist und ein den Abtastzeitpunkt bestimmender Eingang (68a) des Abtasthaltegliedes (68) über einen Adressen-Dekodierer (69) an den Ausgang des Zählers (65) angeschlossen ist.

15. Einrichtung nach Anspruch 14, dadurch gekennzeichnet, dass der Ausgang (32) des Sättigungsdetektors (30) über ein Und-Glied (90) mit dem Schalteingang (73) des ersten Schalters (70) verbunden ist und ein welterer Eingang des Und-Gliedes (90) über ein Halteglied (91) mit dem Ausgang des Adressen-Dekodierers (69) verbunden ist.

16. Verwendung der Einrichtung nach einem der Ansprüche 7 bis 15 bei einem mehrphasigen elektrischen Energieversorgungsnetz mit jeweils einem Stromwandler ($20_R$, $20_S$, $20_T$) pro Phase (R, S, T), dadurch gekennzeichnet, dass an jeden Stromwandler ($20_R$, $20_S$, $20_T$) ein Sättigungsdetektor ($30_R$, $30_S$, $30_T$) und ein Polaritätsdetektor ($40_R$, $40_S$, $40_T$) angeschlossen sind und mindestens ein Nulldurchgangsdetektor ($50_I$, $50_{II}$), mindestens ein Extrapolationsschaltkreis ($60_I$, $60_{II}$) und mindestens ein erster Schalter ($70_I$, $70_{II}$) über eine Auswahlschaltung (100) mit einem der Stromwandler ($20_{R, S}$, $20_T$) und dem an diesen Stromwandler ($20_R$ $20_S$, $20_t$) angeschlossenen Sättigungsdetektor ($30_R$, $30_S$, $30_T$) und Polaritätsdetektor ($40_R$, $40_S$, $40_T$) verbindbar sind.

## Claims

1. Method for evaluating the secondary current ($J_2$) of a current transformer (20), the primary side of which is connected into a line (10) of an electric power supply system, on saturation of the current transformer (20), in which method zero transitions are selected, characterized in that, with the onset of saturation, a saturation signal (X) indicating the saturation and a polarity signal (P) indicating the polarity of the displacement of the primary current ($J_1$) are generated, that the saturation signal (X) and the polarity signal (P) are used to select zero transitions, corresponding to the polarity of the displacement of the primary current ($J_1$) and not affected by the saturation, of the secondary current ($J_2$), that the instantaneous value of the secondary current ($J_2$) is sensed in each case at a particular point in time following the selected zero transitions, that in each case a sinusoidal current signal (C) is generated which is synchronized with the selected zero transitions and the size of which is matched to the respective instantaneous value of the secondary current ($J_2$) at the particular points in time, and that, after the onset of saturation, the current signal (C) is supplied instead of the secondary current ($J_2$).

2. Method according to Claim 1, characterized in that the transgression of a trigger threshold by the difference between the secondary current ($J_2$) and the secondary current ($J_{2'}$) subjected to a frequency filtering is used as criterion for the onset of saturation and for the generation of the saturation signal (X).

3. Method according to Claim 2, characterized in that the trigger threshold is set successively to different fractions of the maximum value of the secondary current ($J_2$).

4. Method according to Claim 1, characterized in that the polarity of the displacement of the primary current ($J_1$) is set to be equal to the polarity of the difference between the secondary current ($J_2$) and the secondary current ($J_{2'}$) subjected to a frequency filtering and is in each case allocated to one of two states of the polarity signal (P).

5. Method according to Claim 3 or 4, characterized in that the frequency filtering leaves only a mainsfrequency sinusoidal secondary current ($J_2$) unchanged in amplitude and phase.

6. Method according to Claim 1, characterized in that the current signal (C) is generated by digital/analog conversion from discrete instantaneous values stored in binary coded form.

7. Device for evaluating the secondary current ($J_2$) of a current transformer (20), the primary side of which is connected into a line (10) of an electric power supply system, on saturation of the current transformer (20), comprising a zero transition detector (50) emitting zero transition signals (N) at an output (54), characterized in that a saturation detector (30) emitting a saturation signal at an output (32) with onset of a saturation, a polarity detector (40) indicating the polarity of the displacement of the primary current ($J_1$) by a

polarity signal (P) at an output (42), and, with a first input in each case (51, 61, 71), the zero transition detector (50), an extrapolation circuit (60) emitting a current signal (C) at an output (63) and a first switch (70) are connected to the secondary side of the current transformer (20), that the said output (32) of the saturation detector (30) is connected to a second (52) and the said output (42) of the polarity detector (40) is connected to a third input (53) of the zero transition detector (50), and that these inputs (52, 53) are selection inputs for the zero transition signals (N), the zero transition detector (50) emitting zero transitions, which are not affected by the saturation, of the secondary current (J2) at its output (54), that the said output (54) of the zero transition detector (50) is connected to a second input (62) of the extrapolation circuit (60), the extrapolation circuit (60) generating at its output (63) a sinusoidal current signal (C) which is synchronized in accordance with the zero transitions selected by the zero transition detector (50) and is matched in its amplitude in each case to the instantaneous value of the secondary current $(J_2)$ sampled at a particular point in time after a selected zero transition, that the said output (63) of the extrapolation circuit (60) is connected to a second input (72) of the first switch (70) and that its switching input (73) is connected to the output (32) of the saturation detector (20) so that, with the presence of a saturation signal (X), the second input (72) is connected through to the output of the first switch (70).

8. Device according to Claim 7, characterized in that the saturation detector (30) is provided with a first differentiator (33), the first input of which is connected directly and the second input of which is connected via a first frequency filter (34) to the input (31) of the saturation detector (30), and with a first trigger (35) which follows the first differentiator (33) and the output of which is connected to the output (32) of the saturation detector (30).

9. Device according to Claim 8, characterized in that the input (31) of the saturation detector (30) is connected in series to a low-pass filter (36), a circuit for detecting the maximum value (37) and to a voltage divider (38) having at least one tap for the trigger threshold of the first trigger (35).

10. Device according to Claim 9, characterized in that the trigger threshold of the first trigger (35) can be tapped off via a second switch (39a) at at least two different taps of the voltage divider (38) and the second switch (39a) is controlled by a first integrator (39b), a second trigger (39c) and a delay section (39d) which are connected in series to the output of the first differentiator (33).

11. Device according to one of Claims 7 to 10, characterized in that the polarity detector (40) is provided with a second differentiator (43), the first input of which is connected directly and the second input of which is connected via a second frequency filter (44) to the input (41) of the polarity detector (40) and the output of which is applied via a second integrator (45) to an input (46a) of a comparator (46), the output of which is connected to the output (42) of the polarity detector.

12. Device according to one of Claims 7 to 11, characterized in that a square-wave converter (55) and an edge trigger (56) are connected in series between the first input (51) and the output (54) of the zero transition detector (50), an input (56a), which determines the polarity of the trigger edges, of the edge trigger (56) being connected to the output of a D-type flip flop (57), to the clock input of which the second (52) and to the D input of which the third input (53) of the zero transition detector (50) are applied.

13. Device according to one of Claims 7 to 12, characterized in that a clock generator (64), a counter (65), a read-only memory (66) and a multiplying digital/analog converter (67) are connected in series between the second input (62) and the output (63) of the extrapolation circuit (60).

14. Device according to Claim 13, characterized in that the first input (61) of the extrapolation circuit (60) is connected via a sample/hold section (68) to an input (67a), which determines the multiplication factor, of the multiplying digital/analog converter (67), and an input (68a), which determines the sampling time, of the sample/hold section (68) is connected via an address decoder (69) to the output of the counter (65).

15. Device according to Claim 14, characterized in that the output (32) of the saturation detector (30) is connected via an AND section (90) to the switching input (73) of the first switch (70) and another input of the AND section (90) is connected via a holding section (91) to the output of the address decoder (69).

16. Application of the device according to one Claims 7 to 15 in a multi-phase electric power supply system comprising in each case a current transformer $(20_R, 20_S i\ 20_T)$ per phase (R, S, T), characterized in that each current transformer $(20_R, 20_S i\ 20_T)$ is connected to a saturation detector $(30_R, 30_S, 30_T)$ and a polarity detector $(40_R i\ 40_S, 40_T)$ and at least one zero transition detector $(50_I, 50_{II})$, at least one extrapolation circuit $(60_I, 60_{II})$ and at least one first switch $(70_I, 70_{II})$ can be connected via a selection switch (100) to one of the current transformers $(20_R, 20_S, 20_T)$ and to the saturation detector $(30_R, 30_S, 30_T)$ and polarity detector $(40_R, 40_S, 40_T)$ connected to this current transformer $(20_R, 20_S, 20_T)$.

**Revendications**

1.- Procédé pour évaluer le courant secondaire $(J_2)$ d'un transformateur de courant (20) connecté par son primaire dans une ligne (10) d'un réseau d'alimentation d'énergie électrique, lors d'une saturation du transformateur de courant (20), suivant lequel des passages par zéro sont sélectionnés, caractérisé en ce que lors du début de la saturation, un signal de saturation (X) indiquant la saturation, ainsi qu'un signal de polarité (P) indiquant la polarité du déplacement du courant primaire (J₁) sont produits, que les passages par zéro du courant secondaire (J₂) qui ne sont pas concernés par la saturation sont sélectionnés au moyen du signal de saturation (X) et du signal de polarité (P) correspondant à la polarité du déplacement du courant primaire (J₁), que la valeur du moment du courant secondaire (J₂) est détectée chaque fois à un moment déterminé après les passages par zéro sélectionnés, qu'un signal de courant sinusoïdal (C) synchronisé avec les passages par zéro sélectionnés, adapté aux moments déterminés en grandeur à la valeur du moment an question du courant secondaire (J₂), est chaque fois produit et que le signal de courant (C) est fourni en lieu et place du courant secondaire (J₂) après le début de la saturation.

2.- Procédé suivant la revendication 1, caractérisé en ce qu'à titre de critère pour le début de la saturation et pour la production du signal de saturation (X), on utilise le dépassement d'un seuil de déclenchement par la différence entre le courant secondaire (J₂) et le courant secondaire (J₂') soumis à un filtrage de fréquences.

3.- Procédé suivant la revendication 2, caractérisé en ce que le seuil de déclenchement est réglé consécutivement sur diverses fractions de la valeur maximum du courant secondaire (J₂).

4.- Procédé suivant la revendication 1, caractérisé en ce que la polarité du déplacement du courant primaire (J1) est rendue égale à la polarité de la différence entre le courant secondaire (J₂) et le courant secondaire (J₂') soumis à un filtrage de fréquences et est associé chaque fois à l'un de deux états du signal de polarité (P).

5.- Procédé suivant la revendication 3 ou 4, caractérisé en ce que le filtrage de fréquences ne laisse qu'un courant secondaire sinusoïdal (J₂) à la fréquence du réseau inchangé en amplitude et en phase.

6.- Procédé suivant la revendication 1, caractérisé en ce que le signal de courant (C) est produit par conversion numérique-analogique à partir de valeurs momentanées discrètes stockées et codées en binaire.

7.- Dispositif pour évaluer le courant secondaire (J₂) d'un transformateur de courant (20) connecté par son primaire dans une ligne (10) d'un réseau d'alimentation d'énergie électrique dans le cas d'une saturation du transformateur de courant (20) comportant un détecteur de passages par zéro (50) fournissant des signaux de passage par zéro (N) à une sortie (54), caractérisé en ce qu'un détecteur de saturation (30) émettant sur une sortie (32) un signal de saturation au début d'une saturation, un détecteur de polarité (40) indiquant la polarité du déplacement du courant primaire (J₁) par un signal de polarité (P) sur une sortie (42) et, chaque fois par une première entrée (51, 61, 71), le détecteur de passages par zéro (50), un circuit d'extrapolation (60) fournissant un signal de courant (C) sur une sortie (63), ainsi qu'un premier commutateur (70) sont connectés au secondaire du transformateur de courant (20), que la dite sortie (32) du détecteur de saturation (30) est connectée à une deuxième entrée (52) et la dite sortie (42) du détecteur de polarité (40) est connectée à une troisième entrée (53) du détecteur de passages par zéro (50) et que ces entrées (52, 53) sont des entrées de sélection pour les signaux de passages par zéro (N), le détecteur de passages par zéro (50) fournissant sur sa sortie (54), des passages par zéro du courant secondaire (J₂) qui ne sont pas concernés par la saturation, que la dite sortie (54) du détecteur de passages par zéro (50) est connectée à une seconde entrée (62) du circuit d'extrapolation (60), le circuit d'extrapolation (60) produisant sur sa sortie (63), un signal de courant sinusoïdal (C) synchronisé d'après les passages par zéro sélectionnés par le détecteur de passages par zéro (50) et adapté en grandeur chaque fois à la valeur du moment du courant secondaire (J₂) analysé à un moment déterminé après un passage par zéro sélectionné, que la dite sortie (63) du circuit d'extrapolation (60) est connectée à une deuxième entrée (72) du premier commutateur (70) et que son entrée de commutation (73) est connectée à la sortie (32) du détecteur de saturation (30), de sorte qu'en présence d'un signal de saturation (X), la deuxième entrée (72) est connectée à la sortie du premier commutateur (70).

8.- Dispositif suivant la revendication 7, caractérisé en ce que le détecteur de saturation (30) est pourvu d'un premier formateur de différence (33) dont la première entrée est connectée directement et la seconde entrée par l'intermédiaire d'un premier filtre de fréquences (34) à l'entrée (31) du détecteur de saturation (30) et d'un premier trigger (35) qui suit le premier formateur de différence (33) et dont la sortie est connectée à la sortie (32) du détecteur de saturation (30).

9.- Dispositif suivant la revendication 8, caractérisé en ce qu'à l'entrée (31) du détecteur de saturation (30), sont connectés en série, un filtre passe-bas (36), un circuit de détection de valeur maximum (37) ainsi qu'un diviseur de tension (38) comportant au moins une prise pour le seuil de déclenchement du premier trigger (35).

10.- Dispositif suivant la revendication 9, caractérisé en ce que le seuil de déclenchement du premier trigger (35) peut être obtenu par l'intermédiaire d'un second commutateur (39a) sur au moins deux prises différentes du diviseur de tension (38) et le second commutateur (39a) est commandé par un premier intégrateur (39b), un second trigger (39c) et un élément à retard (39d) qui sont connectés en série à la sortie du premier formateur de différence (33).

11.- Dispositif suivant l'une quelconque des revendications 7 à 10, caractérisé en ce que le détecteur de polarité (40) est pourvu d'un second formateur de différence (43) dont la première entrée est connectée directement et la seconde entrée par l'intermédiaire d'un second filtre de fréquences (34) à l'entrée (41) du détecteur de polarité (40) et dont la sortie alimente, par l'intermédiaire d'un second intégrateur (45), une entrée (46a) d'un comparateur (46) dont la sortie est connectée à la sortie (42) du détecteur de polarité.

12.- Dispositif suivant l'une quelconque des revendications 7 à 11, caractérisé en ce qu'entre la première entrée (51) et la sortie (54) du détecteur de passages par zéro (50), un conformateur rectangulaire (55) et un trigger de flancs (56) sont connectés en série, une entrée (56a) du trigger de flancs (56) déterminant la polarité des flancs de déclenchement étant connectée à la sortie d'une bascule D (57) dont l'entrée d'horloge est alimentée par la deuxième entrée (52) et dont l'entrée D est alimentée par la troisième entrée (53) du détecteur de passages par zéro (50).

13.- Dispositif suivant l'une quelconque des revendications 7 à 12, caractérisé en ce qu'entre la deuxième entrée (62) et la sortie (63) du circuit d'extrapolation (60), un générateur d'horloge (64), un compteur (65), une mémoire morte (66) et un convertisseur numérique-analogique multiplicateur (67) sont connectés en série.

14.- Dispositif suivant la revendication 13, caractérisé en ce que la première entrée (61) du circuit d'extrapolation (60) est connectée par l'intermédiaire d'un élément de maintien d'analyse (68) à l'entrée déterminant le facteur de multiplication (67a) du convertisseur numérique-analogique multiplicateur (67) et une entrée déterminant le moment d'analyse (68a) de l'élément de maintien d'analyse (68) est connectée par l'intermédiaire d'un décodeur d'adresses (69) à la sortie du compteur (65).

15.- Dispositif suivant la revendication 14, caractérisé en ce que la sortie (32) du détecteur de saturation (30) est connectée par l'intermédiaire d'un élément ET (90) à l'entrée de commutation (73) du premier commutateur (70) et une autre entrée de l'élément ET (90) est connectée par l'intermédiaire d'un élément de maintien (91) à la sortie du décodeur d'adresses (69).

16.- Utilisation du dispositif suivant l'une quelconque des revendications 7 à 15 dans le cas d'un réseau d'alimentation d'énergie électrique polyphasé avec un transformateur de courant $(20_R, 20_S, 20_T)$ pour chaque phase (R, S, T), caractérisée en ce qu'à chaque transformateur de courant $(20_R, 20_S, 20_T)$ sont connectés un détecteur de saturation $(30_R\ 30_S\ 30_T)$ et un détecteur de polarité $(40_R, 40_S, 40_T)$ et au moins un détecteur de passages par zéro $(50_I, 50_{II})$, au moins un circuit d'extrapolation $(60_I, 60_{II})$ et au moins un premier commutateur $(70_I, 70_{II})$ peuvent être connectés par l'intermédiaire d'un circuit de sélection (100) à l'un des transformateurs de

courant $(20_R, 20_S, 20_T)$ ainsi qu'au détecteur de saturation $(30_R, 30_S, 30_T)$ et au détecteur de polarité $(40_R, 40_S, 40_T)$ connectés à ce transformateur de courant $(20_R, 20_S, 20_T)$.

FIG.1

# FIG.2

FIG.3